# EUROPÄISCHE PATENTSCHRIFT

(11) **EP 2 443 424 B1**
(45) Veröffentlichungstag und Bekanntmachung des Hinweises auf die Patenterteilung: **17.04.2013**
(21) Anmeldenummer: 10723528.5
(22) Anmeldetag: 28.05.2010
(51) Int. Cl.: G01F 15/14, G01F 15/00

(54) **GEHÄUSE AUS FASERVERSTÄRKTEM KUNSTSTOFF**
HOUSING MADE OF FIBRE REINFORCED PLASTIC
BOITIER EN MATIÈRE PLASTIQUE RENFORCÉE PAR FIBRES

(30) Priorität: 17.06.2009 DE 202009008315 U
(43) Veröffentlichungstag der Anmeldung: 25.04.2012
(73) Patentinhaber: Sensus Spectrum LLC, Raleigh, NC 27615 (US)
(72) Erfinder: CHU, Anh, Tuan, 67071 Ludwigshafen (DE); FESSER, Ralf, 67256 Weisenheim am Sand (DE)
(74) Vertreter: Patentanwälte Bitterich, Dr. Keller, Schwertfeger
(86) Internationale Anmeldenummer: PCT/EP2010/003265
(87) Internationale Veröffentlichungsnummer: WO 2010/145751

(56) Entgegenhaltungen:
- WO-A1-2004/022917
- DE-A1- 3 542 433
- DE-A1-102006 045 325
- US-A- 3 104 583

## Beschreibung

### Technisches Gebiet:

Die Erfindung betrifft Gehäuse aus Kunststoff, die unter Innendruck setzbar sind, umfassend ein Gehäuseoberteil, ein Gehäuseunterteil und einen Verschluss, der beide Gehäuseteile miteinander verbindet. Ein solches Gehäuse nach dem Oberbegriff des Anspruchs 1 ist beispielsweise in der DE 35 42 433 A1 offenbart.

### Stand der Technik:

Die DE 10 2006 045 325 A1 offenbart ein Zählergehäuse mit einem oberen und unteren Gehäuseteil, die mittels eines Verbindungsmittels in Form eines Rings aneinander fixiert sind. Der Ring weist mehrere radial nach innen gerichtete Eingriffsabschnitte auf, die in Halteaufnahmen am innenliegenden Gehäuseteil eingreifen.

Aus der DE 102 38 416 A1 oder der DE 20 2005 017 576 U1 sind Flüssigkeitszähler bekannt, die ein druckfestes, aus Kunststoff hergestelltes Gehäuse besitzen. Das Gehäuse besteht aus einem Gehäuseoberteil und einem Gehäuseunterteil. Beide besitzen jeweils einen umlaufenden, nach außen gestellten Flansch. Ein die beiden Flansche übergreifender und damit die Gehäuseteile miteinander verbindender zweiteiliger Verschlussring besitzt einen U-förmigen Querschnitt und verbindet Gehäuseoberteil und Gehäuseunterteil zugfest miteinander.

Die Erfahrung hat gezeigt, dass diese Konstruktion zwei grundsätzliche Schwachstellen aufweist. Die eine Schwachstelle ist die Innenkante zwischen dem jeweiligen Gehäuseteil und seinem Flansch, die zweite Schwachstelle ist die scharfe Innenkante zwischen Verschlussringbasis und Verschlussringseitenwand. Hier kommt es aufgrund der Hebelwirkung unter dem Einfluss der hohen Innendruckkräfte im Gehäuse zu Biegemomenten, die zur Rissbildung und damit zum Versagen führen können, wenn nicht durch entsprechende Überdimensionierung der Wandstärken und der Übergangsradien vorgebeugt wird. Das ist unbefriedigend.

### Darstellung der Erfindung:

Der vorliegenden Erfindung liegt die Aufgabe zugrunde, ein zweiteiliges Gehäuse aus Kunststoff anzugeben, das für hohen Innendruck geeignet ist und eine platz- und materialsparende sowie dauerfeste Verbindungskonstruktion aufweist.

Diese Aufgabe wird gelöst durch gattungsgemäße Gehäuse mit den kennzeichnenden Merkmalen:
- Gehäuseoberteil (10) und Gehäuseunterteil (20) besitzen an der Verbindungsstelle eine Mehrzahl kammartiger Haltesäulen (11, 21),
- die Haltesäulen (11, 21) an Gehäuseoberteil (10) bzw. Gehäuseunterteil (20) sind komplementär zueinander geformt und kämmen miteinander so, dass sich die Gehäuseteile (10, 20) zusammenstecken lassen,
- die Haltesäulen (11, 21) sind in der Richtung orientiert, in der die Zugkraft zwischen Gehäuseoberteil (10) und Gehäuseunterteil (20) gerichtet ist, wenn das Gehäuse unter Innendruck gesetzt ist,
- in jeweils zwei sich gegenüber liegende Oberflächen der Haltesäulen (11, 21) sind Haltenuten (13, 23; 16, 25, 26) eingeformt, die quer zur Wirkrichtung der Zugkraft orientiert sind,
- in die Haltenuten (13, 23) sind Haltekörper (32; 35, 36) einbringbar, die die durch die Haltenuten (13, 23) gebildeten Flächen wenigstens teilweise berühren.

Vorteilhafte Ausgestaltungen und Weiterbildungen sind Gegenstand der Unteransprüche.

Die erfindungsgemäßen kammartig ineinandersteckbaren Haltesäulen werden nur auf Zug, nicht auf Biegung beansprucht, wobei die durch den Gehäuseinnendruck in Richtung senkrecht zur Trennfläche zwischen Gehäuseober- und -unterteil ausgeübte Zugspannung sich auf entsprechend viele Haltesäulen verteilt, so dass die spezifische Belastung entsprechend reduziert ist. Die in den Haltenuten sitzenden Haltekörper, z. B. Haltebolzen werden nur auf Scherung beansprucht, können somit aus Kunststoff und mit relativ geringen Querschnitten ausgebildet werden. Die Haltekörper, d. h. die Haltebolzen bzw. Halteringe selbst sind in den Haltenuten bzw. Haltebohrungen formstabil untergebracht und können sich somit nicht verformen.

Der wesentliche Vorteil der erfindungsgemäßen Konstruktion ist jedoch darin zu sehen, dass alle Haltesäulen durch Einleitung von Kräften auf jeweils zwei gegenüber liegenden Seiten gleichzeitig und gleichmäßig belastet werden; die entsprechenden Momente kompensieren sich somit, so dass auf die Haltesäulen keine resultierenden Biegemomente wirken.

Gemäß einer ersten Ausgestaltung der Erfindung sind die Flächen, über die die Zugkraft auf die Seite übertragen wird, zur Gehäusemitte hin, vorzugsweise radial, gerichtet.

Die Montage der Haltebolzen lässt sich vereinfachen und beschleunigen, wenn die Flächen, über die die Zugkraft auf die Seite übertragen wird, gemäß einer zweiten Ausgestaltung der Erfindung gruppenweise parallel gerichtet sind.

Gemäß einer Weiterbildung der Erfindung sind in wenigstens eine der sich in Zugrichtung erstreckenden Berührungsflächen mehrere Haltenuten eingeformt. Dadurch besteht die Möglichkeit, die Zugkräfte auf mehrere Haltekörper bzw. Haltebolzen zu verteilen.

Um die Montage der Haltekörper bzw. Haltebolzen zu vereinfachen, können mehrere Haltekörper bzw. Haltebolzen mittels Verbindungsleiste zu einer oder mehreren Montageeinheiten verbunden sein.

Gemäß einer Weiterbildung der Erfindung besitzen die Verbindungsleisten der einen Montageeinheiten gekröpfte Enden, die die Verbindungsleisten der anderen Montageeinheiten überlappen. Auf diese Weise blockieren die einen Verbindungsleisten die anderen Verbindungsleisten gegen eine unbefugte Demontage.

Gemäß einer dritten Ausgestaltung der Erfindung sind alle sich in Zugrichtung erstreckenden Berührungsflächen parallel gerichtet. Diese Ausführungsform ist besonders geeignet für Gehäuse mit ovalem oder rechteckigem Querschnitt.

Gemäß einer vierten Ausgestaltung der Erfindung sind in jeweils zwei radial gegenüber liegende Oberflächen der Haltesäulen Haltenuten eingeformt, wobei die Haltenuten benachbarter Haltesäulen fluchten. In die Haltenuten sind innere bzw. äußere Halteringe einbringbar, die die Haltenuten wenigstens teilweise ausfüllen.

Vorteilhafterweise ergänzen sich die Haltenuten benachbarter Haltesäulen zu Wendelnuten, in die wendelförmige Haltekörper eingeschraubt werden können.

Um eine unbefugte Demontage der Haltekörper zu verhindern, besitzt wenigstens einer derselben eine Einrichtung zur unlösbaren Verankerung mit dem Gehäuse.

Alternativ oder zusätzlich kann wenigstens eine der Rückenleisten eine Einrichtung zur unlösbaren Verankerung mit dem Gehäuse aufweisen.

Alternativ oder zusätzlich können die Rückenleisten mit Einrichtungen versehen sein, die eine unlösbare Verbindung untereinander bewirken.

Die Verbindung der Gehäuseteile kann nicht nur mit Hilfe von vorgefertigten Haltekörpern erfolgen. Alternativ ist es möglich, die Haltebolzen durch Verwendung eines vorzugsweise schnell härtenden Kunststoffs direkt in den Haltebohrungen entstehen zu lassen.

Die erfindungsgemäße Ausgestaltung der Verbindung der beiden Gehäuseteile macht das Gehäuse insbesondere geeignet zur Verwendung bei Wasserverbrauchszählern, insbesondere wenn diese große Querschnitte besitzen und/oder für hohe Drücke ausgelegt sind.

### Kurze Beschreibung der Zeichnungen:

Anhand der Zeichnungen soll die Erfindung in Form von Ausführungsbeispielen näher erläutert werden. Es zeigen jeweils rein schematisch
- Fig. 1: eine isometrische Darstellung eines großvolumigen Wasserzählers mit einem Gehäuse aus faserverstärktem Kunststoff, das für hohen Innendruck dimensioniert ist,
- Fig. 2: eine rein schematische Darstellung einer ersten Ausführung der Konstruktion zur zugfesten Verbindung von Gehäuseoberteil und Gehäuseunterteil,
- Fig. 3: eine Draufsicht auf das fertig montierte Gehäuse der Fig. 2,
- Fig. 4: eine rein schematische Darstellung einer zweiten Ausführungsform der zugfesten Verbindung zwischen Gehäuseoberteil und Gehäuseunterteil,
- Fig. 5: eine Draufsicht auf das fertig montierte Gehäuse der Fig. 4
- Fig. 6: eine rein schematische Darstellung einer dritten Ausführungsform der zugfesten Verbindung zwischen Gehäuseoberteil und Gehäuseunterteil und
- Fig. 7: eine Draufsicht auf das fertig montierte Gehäuse der Fig. 6.

### Wege zur Ausführung der Erfindung und gewerbliche Verwertbarkeit:

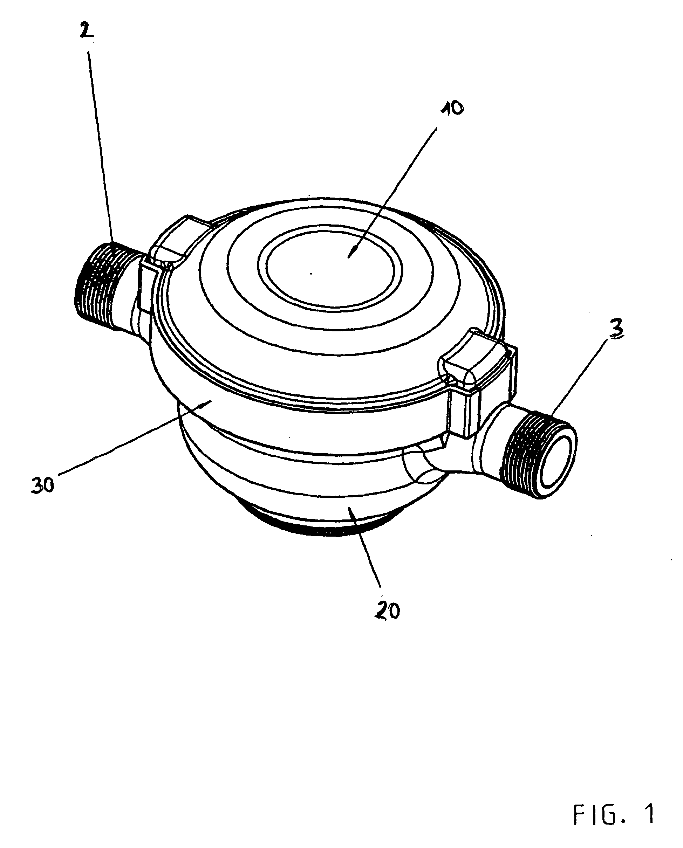

Fig. 1 zeigt beispielhaft eine isometrische Darstellung eines Wasserzählers mit einem zweiteiligen Gehäuse aus faserverstärktem Kunststoff. Das Gehäuse besteht aus einem Gehäuseoberteil 10, einem Gehäuseunterteil 20 mit Einlass- und Auslassstutzen 2, 3 und einem Verschluss 30, der Gehäuseoberteil 10 und Gehäuseunterteil 20 bei Innendruck im Gehäuse zugfest miteinander verbindet. Die von dem Verschluss 30 aufzunehmenden Zugkräfte werden durch den Innendruck des den Wasserzähler durchfließenden Wassers, multipliziert mit der Querschnittsfläche des Gehäuses, erzeugt.

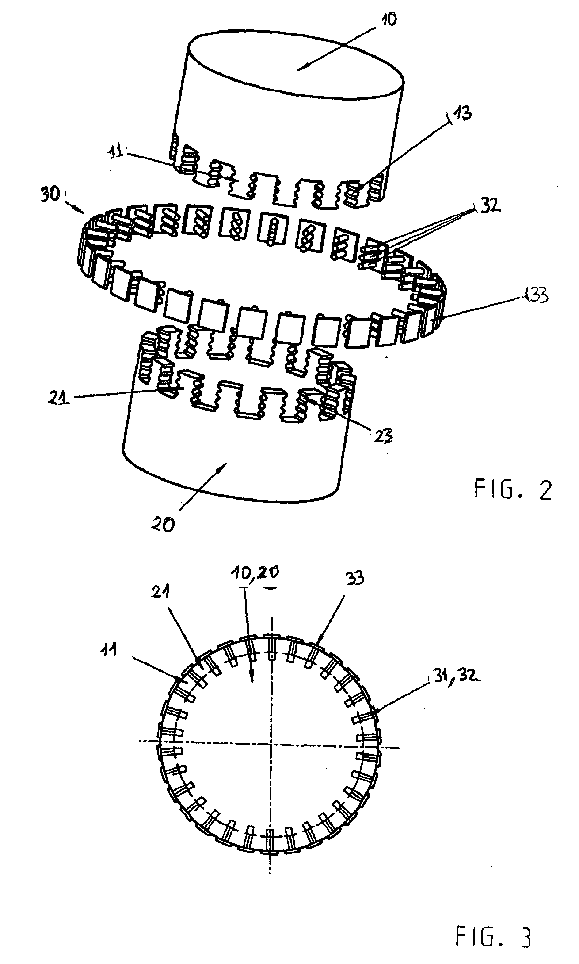

Fig. 2 zeigt in Form eines Sprengbilds eine rein schematische Darstellung einer ersten Ausführungsform der zugfesten Verbindung des Gehäuses der Fig. 1. Man erkennt das Gehäuseoberteil 10, das Gehäuseunterteil 20 und den Verschluss 30. Im Verbindungsbereich besitzen Gehäuseoberteil 10 und Gehäuseunterteil 20 kammartige Haltesäulen 11, 21. Die Haltesäulen 11, 21 sind gegeneinander versetzt und so aufeinander abgestimmt, dass sich die beiden Gehäuseteile 10, 20 praktisch lückenlos zusammenstecken lassen. In die Berührungsflächen der Haltesäulen 11, 21 sind quer zur Zugkraftrichtung Haltenuten 13, 23 eingeformt, die sich zu Haltehohlräumen 31 (Fig. 3) ergänzen. Diese Haltehohlräume 31 sind in dem Ausführungsbeispiel der Fig. 2 und 3 zylindrisch und radial gerichtet.

Die zugfeste Verbindung von Gehäuseober- und -unterteil 10, 20 erfolgt mit Hilfe von Haltebolzen 32, die in die Haltehohlräume 31 eingesteckt werden. Um die Montage zu vereinfachen, sind die in Zugkraftrichtung übereinander angeordneten Haltebolzen 32 jeweils mit Hilfe einer Verbindungsleiste 33 zu einer Montageeinheit verbunden.

Fig. 3 zeigt eine Draufsicht auf das fertig montierte Gehäuse der Fig. 2. Eine Vielzahl von Haltebolzen 32 befindet sich gleichmäßig am Umfang verteilt in den Haltehohlräumen 31, so dass sich die durch den Innendruck im Gehäuse 10, 20 gebildete Zugkraft auf entsprechend viele Haltebolzen 32 verteilt. Des Weiteren erkennt man, dass sich die von den Haltebolzen 32 auf die jeweiligen Haltesäulen 11, 21 ausgeübten, in Umfangsrichtung gerichteten Kräfte rechts und links der jeweiligen Haltesäulen 11, 21 kompensieren, so dass auf die Haltesäulen 11, 21 keine resultierenden Biegekräfte ausgeübt werden.

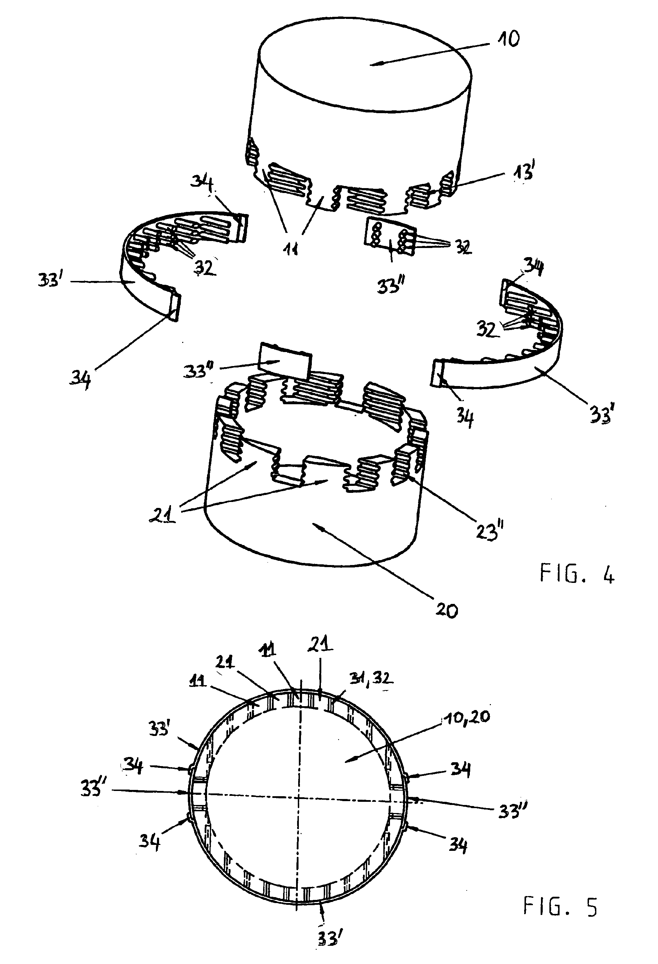

Fig. 4 zeigt ebenfalls als Sprengbild und rein schematisch eine zweite Verschlusskonstruktion. Hier sind die sich in Zugkraftrichtung erstreckenden Berührungsflächen von Gehäuseoberteil 10 und Gehäuseunterteil 20 gruppenweise parallel gerichtet. Insgesamt erkennt man vier Gruppen, zwei große parallele Gruppen rechts und links und zwei schmale parallele Gruppen vorne und hinten. Die Haltebolzen 32 sind mit Hilfe von langen und kurzen Verbindungsleisten 33', 33" gruppenweise zu Montageeinheiten zusammengefasst, wodurch sich die Montagezeit des zweiten Ausführungsbeispiels gegenüber der Montagezeit des ersten Ausführungsbeispiels deutlich verringern lässt.

Des Weiteren erkennt man, dass die langen Verbindungsleisten 33' der einen Montageeinheit abgekröpfte Enden 34 besitzen, die die kurzen Montageleisten 33" der anderen Montageeinheiten überlappen. Die kurzen Verbindungsleisten 33" sind somit gegen unbefugtes Lösen gesichert.

Fig. 5 zeigt als Draufsicht das fertig montierte Gehäuse der Fig. 4. Man erkennt die Überlappung der kurzen Verbindungsleisten 33" durch die abgekröpften Enden 34 der langen Verbindungsleisten 33'.

Um ein unbefugtes Öffnen des Gehäuses zu verhindern, können die Haltebolzen 32 bzw. die Verbindungsleisten 33, 33', 33" mittels Plombe gesichert werden. Alternativ oder auch ergänzend besteht die Möglichkeit, an den Haltebolzen 32 und/oder an den Verbindungsleisten 33, 33', 33" Einrichtungen zur unlösbaren Verankerung mit dem Gehäuse vorzusehen.

Eine alternative Möglichkeit, die beiden Gehäuseteile 10, 20 zugfest und gleichzeitig unlösbar miteinander zu verbinden besteht darin, unter Verzicht auf fertig produzierte Haltebolzen 32 die Haltebohrungen 31 mit einem vorzugsweise schnell aushärtenden Kunststoff auszufüllen.

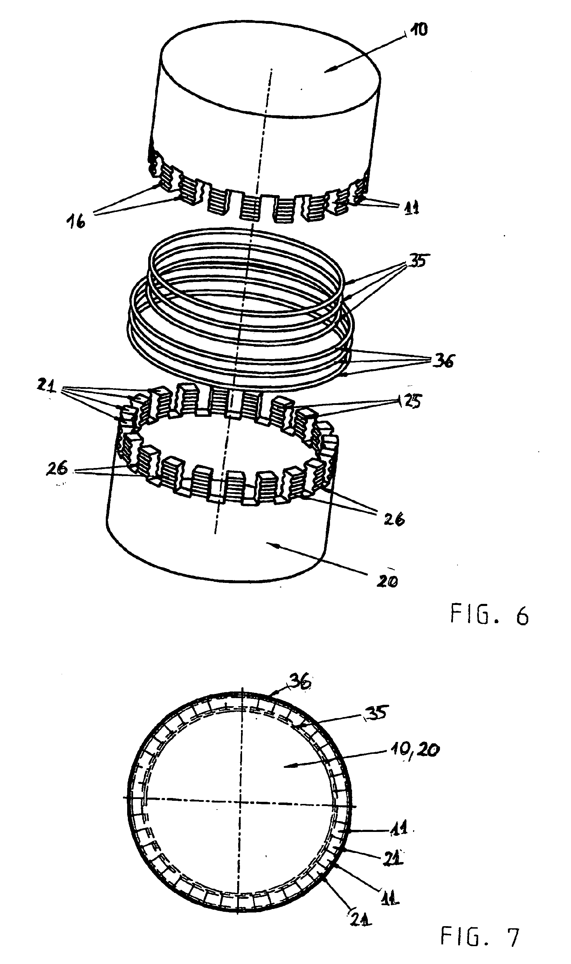

Fig. 6 zeigt ebenfalls als Sprengbild und rein schematisch eine dritte Verschlusskonstruktion. Hier sind in die sich radial gegenüber liegenden Oberflächen der Haltesäulen 11, 21 Haltenuten 16, 25, 26 eingeformt, die sich zu geschlossenen Ringnuten ergänzen, sobald Gehäuseober- und -unterteil 10, 20 zusammen gefügt sind. Die zugfeste Verbindung wird durch innere bzw. äußere Halteringe 35, 36 bewirkt, die in die Haltenuten 16, 25, 26 einmontiert werden.

Fig. 7 zeigt als Draufsicht das fertig montierte Gehäuse der Fig. 4. Die Haltesäulen 11, 21 berühren sich lückenlos und die Halteringe 35, 36 liegen in den Ringnuten.

## Patentansprüche

1. Gehäuse aus Kunststoff, die unter Innendruck setzbar sind, umfassend
- ein Gehäuseoberteil (10),
- ein Gehäuseunterteil (20),
- und einen Verschluss (30), der beide Gehäuseteile (10, 20) miteinander verbindet,
**gekennzeichnet durch** die Merkmale:
- Gehäuseoberteil (10) und Gehäuseunterteil (20) besitzen an der Verbindungsstelle eine Mehrzahl kammartiger Haltesäulen (11, 21),
- die Haltesäulen (11, 21) an Gehäuseoberteil (10) bzw. Gehäuseunterteil (20) sind komplementär zueinander geformt und kämmen miteinander so, dass sich die Gehäuseteile (10, 20) zusammenstecken lassen,
- die Haltesäulen (11, 21) sind in der Richtung orientiert, in der die Zugkraft zwischen Gehäuseoberteil (10) und Gehäuseunterteil (20) gerichtet ist, wenn das Gehäuse unter Innendruck gesetzt ist,
- in jeweils zwei sich gegenüber liegende Oberflächen der Haltesäulen (11, 21) sind Haltenuten (13, 23; 16, 25, 26) eingeformt, die quer zur Wirkrichtung der Zugkraft orientiert sind,
- in die Haltenuten (13, 23) sind Haltekörper (32; 35, 36) einbringbar, die die **durch** die Haltenuten (13, 23) gebildeten Flächen wenigstens teilweise berühren.

2. Gehäuse nach Anspruch 1, **gekennzeichnet durch** die Merkmale:
- jeweils zwei Oberflächen benachbarter Haltesäulen (11, 21) berühren sich,
- in die Berührungsflächen der Haltesäulen (11, 21) sind Haltenuten (13, 23) eingeformt,
- die Haltenuten (13, 23) ergänzen sich zu Haltehohlräumen (31).

3. Gehäuse nach Anspruch 2, **gekennzeichnet durch** die Merkmale:
- die Haltehohlräumen (31) sind zylindrisch,
- in die Haltehohlräumen (31) sind Haltezylinder (32) einbringbar.

4. Gehäuse nach Anspruch 2 oder 3, **gekennzeichnet durch** die Merkmale:
- die Haltehohlräume (31) sind kreiszylindrisch,
- in die Haltehohlräume (31) sind Haltebolzen (32) einbringbar.

5. Gehäuse nach einem der Ansprüche 1 bis 4, **gekennzeichnet durch** das Merkmal:
- die sich in Zugrichtung erstreckenden Berührungsflächen sind radial gerichtet.

6. Gehäuse nach einem der Ansprüche 1 bis 4, **gekennzeichnet durch** das Merkmal:
- die sich in Zugkraftrichtung erstreckenden Berührungsflächen sind gruppenweise parallel gerichtet.

7. Gehäuse nach einem der Ansprüche 1 bis 6, **gekennzeichnet durch** das Merkmal:
- in wenigstens eine der sich in Zugkraftrichtung erstreckenden Berührungsflächen sind mehrere Haltenuten (13, 23; 16, 25, 26) eingeformt.

8. Gehäuse nach wenigstens einem der Ansprüche 1 bis 7, **gekennzeichnet durch** das Merkmal:
- mehrere Haltekörper (32) sind mittels Verbindungsleisten (33; 33', 33") zu Montageeinheiten verbunden.

9. Gehäuse nach Anspruch 8, **gekennzeichnet durch** das Merkmal:
- die Verbindungsleisten (33') der einen Montageeinheit besitzen gekröpfte Enden (34), die die Verbindungsleisten (33") der anderen Montageeinheit überlappen.

10. Gehäuse nach einem der Ansprüche 1 bis 9, **gekennzeichnet durch** das Merkmal:
- alle sich in Zugkraftrichtung erstreckende Berührungsflächen sind parallel gerichtet.

11. Gehäuse nach einem der Ansprüche 1 bis 10, **gekennzeichnet durch** das Merkmal:
- wenigstens einer der Haltekörper (32) besitzt eine Einrichtung zur unlösbaren Verankerung mit dem Gehäuse.

12. Gehäuse nach einem der Ansprüche 1 bis 11, **gekennzeichnet durch** das Merkmal:
- wenigstens eine der Rückenleisten (33; 33', 33") besitzt eine Einrichtung zur unlösbaren Verankerung mit dem Gehäuse.

13. Gehäuse nach einem der Ansprüche 8 bis 12, **gekennzeichnet durch** das Merkmal:
- die Rückenleisten (33; 33', 33") besitzen Einrichtungen zur unlösbaren gegenseitigen Verbindung.

14. Gehäuse nach Anspruch 1, **gekennzeichnet durch** das Merkmal:
- die Haltekörper (32) sind mittels eines schnell aushärtenden Kunststoffs gebildet.

15. Gehäuse nach Anspruch 1, **gekennzeichnet durch** die Merkmale:
- in jeweils zwei radial gegenüber liegende Oberflächen der Haltesäulen (11, 21) sind Haltenuten (16, 25, 26) eingeformt,
- die Haltenuten (16, 25, 26) benachbarter Haltesäulen (11, 21) fluchten,
- in die Haltenuten (16, 25, 26) sind innere bzw. äußere Halteringe (35, 36) einbringbar, die die Haltenuten (16, 25, 26) wenigstens teilweise ausfüllen.

16. Gehäuse nach Anspruch 15, **gekennzeichnet durch** die Merkmale:
- die Haltenuten (16, 25, 26) benachbarter Haltesäulen (11, 21) ergänzen sich zu Wendelnuten,
- die inneren bzw. äußeren Halteringe sind als Wendel ausgebildet.

17. Verwendung eines Gehäuses nach einem der Ansprüche 1 bis 16 als Wasserverbrauchszähler.

## Claims

1. Housings made of plastics material, which can be subjected to internal pressure, comprising:
- an upper housing part (10),
- a lower housing part (20),
- and a closure (30) which connects both housing parts together,
**characterised by** the features:
- the upper housing part (10) and lower housing part (20) have at the connecting point a plurality of comb-like retaining columns (11,21),
- the retaining columns (11,21) on the upper housing part (10) and lower housing part (20) respectively are shaped complementarily to one another and mate together so that the housing parts (10,2) can be fitted together,
- the retaining columns (11,21) are oriented in a direction in which the tensile force between the upper housing part (10) and lower housing part (20) is directed, when the housing is subjected to internal pressure,
- retaining grooves (13,23;16,25,26), which are oriented transversely to the effective direction of the tensile force, are formed in each case in two opposite surfaces of the retaining columns (11,21),
- retaining bodies (32;35,36), which at least partially contact the surfaces formed by the retaining grooves (13,23), can be inserted into the retaining grooves (13,23).

2. A housing according to Claim 1, **characterised by** the features:
- in each case two surfaces of adjacent retaining columns (11,21) contact each other,
- retaining grooves (13,23) are formed in the contact surfaces of the retaining columns (11,21),
- the retaining grooves (13,23) complement one another to form retaining hollow spaces (31).

3. A housing according to Claim 2, **characterised by** the features:
- the retaining hollow spaces (31) are cylindrical,
- retaining cylinders (32) can be introduced into the retaining hollow spaces (31).

4. A housing according to Claim 2 or 3, **characterised by** the features:
- the retaining hollow spaces (31) are circular cylindrical,
- retaining pins can be introduced into the retaining hollow spaces (31).

5. A housing according to any one of Claims 1 to 4, **characterised by** the feature:
- the contact surfaces extending in the tensile direction are oriented radially.

6. A housing according to any one of Claims 1 to 4, **characterised by** the feature:
- the contact surfaces extending in the tensile force direction are oriented parallel in groups.

7. A housing according to any one of Claims 1 to 6, **characterised by** the feature:
- a plurality of retaining grooves (13,23;16,25,26) is formed in at least one of the contact surfaces extending in a tensile force direction.

8. A housing according to any one of Claims 1 to 7, **characterised by** the feature:
- a plurality of retaining bodies (32) is connected by means of connecting bars (33;33',33") to form assembly units.

9. A housing according to Claim 8, **characterised by** the feature:
- the connecting bars (33') of one assembly unit have bent ends (34) which overlap the connecting bars (33") of the other assembly unit.

10. A housing according to any one of Claims 1 to 9, **characterised by** the feature:
- all contact surfaces extending in the tensile force direction are directed parallel.

11. A housing according to any one of Claims 1 to 10, **characterised by** the feature:
- at least one of the retaining bodies (32) has a device for non-detachable anchoring to the housing.

12. A housing according to any one of Claims 1 to 11, **characterised by** the feature:
- at least one of the back bars (33;33',33") has a device for non-detachable anchoring to the housing.

13. A housing according to any one of Claims 8 to 12, **characterised by** the feature:
- the back bars (33;33',33") have devices for non-detachable mutual connection.

14. A housing according to Claim 1, **characterised by** the feature:
- the retaining bodies (32) are formed by a rapidly curing plastics material.

15. A housing according to Claim 1, **characterised by** the features:
- retaining grooves (16,25,26) are formed in each case in two radially opposite surfaces of the retaining columns (11,21),
- the retaining grooves (16,25,26) of adjacent retaining columns (11,21) are in alignment,
- inner and outer retaining rings (35,36) respectively, which at least partly fill the retaining grooves (16,25,26), can be introduced into the retaining grooves (16,25,26).

16. A housing according to Claim 15, **characterised by** the features:
- the retaining grooves (16,25,26) of adjacent retaining columns (11,21) complement one another to form helical grooves,
- the inner and outer retaining rings are in the form of coils.

17. Use of a housing according to any one of Claims 1 to 16 as a water consumption meter.

## Revendications

1. Boîtier en matière plastique qui peut être mis sous pression interne, comprenant
- une partie supérieure de boîtier (10),
- une partie inférieure de boîtier (20),
- et un élément de fermeture (30) qui relie entre elles les deux parties de boîtier (10, 20),
**caractérisé en ce que** :
- la partie supérieure de boîtier (10) et la partie inférieure de boîtier (20) possèdent au point de liaison une pluralité de colonnes de retenue (11, 21) en forme de peigne,
- les colonnes de retenue (11, 21) sont formées de manière complémentaire les unes par rapport aux autres sur la partie supérieure de boîtier (10) et la partie inférieure de boîtier (20) et s'engrènent les unes avec les autres, de sorte que les parties de boîtier (10, 20) peuvent s'emboîter,
- les colonnes de retenue (11, 21) sont orientées dans la direction dans laquelle la force de traction entre la partie supérieure de boîtier (10) et la partie inférieure de boîtier (20) est dirigée lorsque le boîtier est mis sous pression interne,
- des rainures de retenue (13, 23 ; 16, 25, 26), orientées perpendiculairement à la direction d'action de la force de traction, sont formées dans chaque fois deux surfaces opposées des colonnes de retenue (11, 21),
- des corps de retenue (32 ; 35, 36), qui touchent au moins partiellement les surfaces formées par les rainures de retenue (13, 23), peuvent être introduits dans les rainures de retenue (13, 23).

2. Boîtier selon la revendication 1, **caractérisé en ce que** :
- chaque fois deux surfaces de colonnes de retenue (11, 21) adjacentes se touchent,
- des rainures de retenue (13, 23) sont formées dans les surfaces de contact des colonnes de retenue (11, 21),
- les rainures de retenue (13, 23) se complètent pour former des cavités de retenue (31).

3. Boîtier selon la revendication 2, **caractérisé en ce que** :
- les cavités de retenue (31) sont cylindriques,
- des cylindres de retenue (32) peuvent être introduits dans les cavités de retenue (31).

4. Boîtier selon la revendication 2 ou 3, **caractérisé en ce que** :
- les cavités de retenue (31) sont en forme de cylindre circulaire,
- des goujons de retenue (32) peuvent être introduits dans les cavités de retenue (31).

5. Boîtier selon une des revendications 1 à 4, **caractérisé en ce que** :
- les surfaces de contact qui s'étendent dans la direction de traction sont orientées radialement.

6. Boîtier selon une des revendications 1 à 4, **caractérisé en ce que** :
- les surfaces de contact qui s'étendent dans la direction de la force de traction sont orientées parallèlement par groupes.

7. Boîtier selon une des revendications 1 à 6, **caractérisé en ce que** :
- plusieurs rainures de retenue (13, 23 ; 16, 25, 26) sont formées dans au moins une des surfaces de contact qui s'étendent dans la direction de la force de traction.

8. Boîtier selon au moins une des revendications 1 à 7, **caractérisé en ce que** :
- plusieurs corps de retenue (32) sont reliés au moyen de barrettes de liaison (33 ; 33', 33") pour former des unités de montage.

9. Boîtier selon la revendication 8, **caractérisé en ce que** :
- les barrettes de liaison (33') d'une unité de montage possèdent des extrémités coudées (34) qui recouvrent les barrettes de liaison (33") de l'autre unité de montage.

10. Boîtier selon une des revendications 1 à 9, **caractérisé en ce que** :
- toutes les surfaces de contact qui s'étendent dans la direction de la force de traction sont orientées parallèlement.

11. Boîtier selon une des revendications 1 à 10, **caractérisé en ce que** :
- au moins des corps de retenue (32) possède un dispositif permettant l'ancrage indétachable avec le boîtier.

12. Boîtier selon une des revendications 1 à 11, **caractérisé en ce que** :
- au moins une des barrettes dorsales (33 ; 33', 33") possède un dispositif permettant l'ancrage indétachable avec le boîtier.

13. Boîtier selon une des revendications 8 à 12, **caractérisé en ce que** :
- les barrettes dorsales (33 ; 33', 33") possède des dispositifs permettant une liaison réciproque indétachable.

14. Boîtier selon la revendication 1, **caractérisé en ce que** :
- les corps de retenue (32) sont formés au moyen d'une matière plastique à durcissement rapide.

15. Boîtier selon la revendication 1, **caractérisé en ce que** :
- des rainures de retenue (16, 25, 26) sont formées dans chaque fois deux surfaces opposées radialement des colonnes de retenue (11, 21),
- les rainures de retenue (16, 25, 26) de colonnes de retenue (11, 21) adjacentes sont alignées,
- des bagues de retenue (35, 36) intérieures, respectivement extérieures, qui remplissent les rainures de retenue (16, 25, 26) au moins partiellement, peuvent être introduites dans les rainures de retenue (16, 25, 26).

16. Boîtier selon la revendication 15, **caractérisé en ce que** :
- les rainures de retenue (16, 25, 26) de colonnes de retenue (11, 21) adjacentes se complètent pour former des rainures hélicoïdales,
- les bagues de retenue intérieures, respectivement extérieures, sont réalisées sous la forme d'une hélice.

17. Utilisation d'un boîtier selon une des revendications 1 à 16 sous la forme d'un compteur de consommation d'eau.
